# EUROPEAN PATENT APPLICATION

(11) **EP 4 598 277 A1**
(43) Date of publication of application: **06.08.2025**
(21) Application number: 25152354.4
(22) Date of filing: 16.01.2025
(51) Int. Cl.: H05B 45/375, H05B 45/345, H02M 1/00, H02M 1/08, H02M 3/157

(54) **DRIVER DEVICE AND SYSTEM, AND CORRESPONDING METHOD**

(30) Priority: 01.02.2024 IT 202400002109
(71) Applicant: Inventronics GmbH, 85748 Garching b. München (DE)
(72) Inventor: LUCCATO, Daniele, I-31052 Varago di Maserada (Treviso) (IT)
(74) Representative: Buzzi, Notaro & Antonielli d'Oulx S.p.A.

(57) **Abstract**

A converter device (10), such as a buck converter, that can be used for driving LED lighting sources (L) in a multichannel system, comprises:
an input node configured to receive an input signal (Vinput), and an output node (OUT) configured to have coupled thereto an electrical load (L);
an inductance (Lb) between the output node (OUT) and a driver node (N); and
an electronic switch (S1) between the input node (Vinput) and the driver node (N), wherein the driver node (N) is electrically coupled to the input node (Vinput) in response to the electronic switch (S1) being conductive.

End-of-current detection circuitry (Cv, Rv, Dz) set between the driver node (N) and the inductance (Lb) generates an end-of-current signal (VI) indicative of the end of the current (ILb) through the inductance (Lb) in response to the electronic switch (S1) being non-conductive. The electronic switch (S1) is switched from non-conductive to conductive, thus facilitating the flow of current (ILb) through the inductance (Lb), with a delay with respect to the end of the current (ILb) through the inductance (Lb), such delay assuming a first value or a second value, higher than the first, in response to a current-reference signal (Iref) being, respectively, higher or else lower than a threshold level.

## Description

### Technical field

The present disclosure relates to driver devices or drivers.

One or more embodiments may find use, for example, in lighting systems comprising LED lighting sources.

### Description of the prior art

In the sector of power supplies for LED lighting sources there is an ever-increasing appreciation of the possibility of supplying chains or strings of LEDs with one and the same driver, thus providing so-called multichannel drivers.

These drivers are of dimensions slightly larger than a single-channel driver and have a single input connector and a multipolar output connector for supplying a number of chains.

These drivers can be used in applications such as LED sources with radiation of different colours that are mixed and where it is desirable to be able to regulate the current down to low values and with a rapid response.

An example may be a tunable-white (TW) application, where mixing of the cold and hot white colour is obtained by managing the current in both of the chains with a high precision. According to the colour temperature it is possible to set one chain with high current and the other chain with an intensity dimmed down to 1%.

Another example may be represented by multichannel applications for road and street lighting with separate channels, where a first channel may be dedicated to lighting of a lane assigned to vehicle traffic and a second channel may be used for lighting a pedestrian walkway, with the two channels not correlated with one another.

In the framework of outdoor applications there also exists the constraint of getting the variation of the current (dimming) to be in amplitude and not obtained via PWM.

Considering a currently used power supply, a way for managing a multichannel solution may envisage having three internal stages, namely a PFC (power-factor correction) stage, a DC-DC conversion stage for providing an output at constant voltage, and a number of current regulators for driving a number of channels.

The first two stages are quite common and can be obtained as follows:
the PFC can be obtained with a boost converter operating in continuous or discontinuous mode; and
the DC/DC conversion stage may be obtained with flyback or LLC solutions or with asymmetrical converters.

The final current regulation can be obtained with a step-down converter, with different ways for controlling it, above all if the output voltage is higher than 60-100 V, so that it is possible to resort to various solutions to obtain a wide dimming range, above all if the control is carried out using a microcontroller (pC).

Among the various control strategies, the mode based upon the peak current is the one that affords the best performance, with the difficulty, however, of regulating low currents because the current peak becomes rather low. This affects the precision and stability on account of the sensitivity to noise.

Furthermore, if the control is carried out using a microcontroller and the bandwidth is limited by the sampling frequency, an even modest level of noise can trigger a flicker effect.

In the prior art these aspects have been approached in various ways.

For instance, the document US 9 345 079 B2 describes a multichannel driver with two chains of sources of different colour connected in series. The dimming action is obtained with a pulse-width modulation (PWM) via a switch. The disadvantage is that PWM may induce stroboscopic effects and is not suitable for road and street lighting.

The document US 11 039 516 B2 describes a multichannel system in which the regulation is again obtained via a number of switches that shortcircuit sections of LED chains. This technique is useful in the case of colours controlled in PWM mode.

The disadvantage, as in the case seen previously, is that PWM may induce stroboscopic effects and is not suitable for road and street lighting.

Described in the document WO 2021/013677 A1 is a multichannel system where the current is regulated mainly with a boost converter, and the channels are multiplexed via MOSFETs. An inductance is provided for managing the differences of voltage for each string. Here the currents are not regulated via PWM, MOSFET controls cannot be superimposed but complementary. This is a limitation because it means that it is not possible to have all the combinations of current values.

The document US 10 285 231 B2 describes a solution in which the off time is predetermined, with a microcontroller that reads the off time to estimate, together with the on time, the peak current or Ipeak. When the peak value Ipeak calculated is low, the buck converter passes from the limit operating mode to the discontinuous conduction mode (DCM), adding the above DCM part and recalculating the peak value Ipeak. This is necessary to prevent jumps in the output current. The control is in any case always configured to determine the mean current (Iavg), setting the peak value.

The latter solution presents various disadvantages:
to be able to measure the off time with sufficient precision, the microcontroller must have a high resolution (for example, 25 ns between the ticks of the timer);
the calculation of the mean current Iavg requires rather conspicuous resources for a microcontroller;
when the peak-current reference Ipeak is modified and DCM is activated there is the possibility of inducing a flicker of the LEDs; and
to fix a setpoint step, the control must be able to calculate Ipeak with a large bandwidth.

This solution does not tackle questions of multichannel control and concentrates upon the structure of the converter; a timer is provided that controls the off time (which depends upon the converter) and from this calculates the on time. The off time is "captured" by the timer, and the peak-current value is calculated on the basis of the on time in DCM.

To do this, a precise timer is necessary, and in any case one not suitable for simpler microcontrollers. Moreover, various calculation steps may generate flickering.

Other documents that address the question of low-level dimming and transition between critical conduction mode (CCM) and discontinuous conduction mode (DCM) of a MOSFET comprise WO 2015/024778 A2 and WO 2016/050689 A2.

Documents DE 10 2018 204240 A1, US 2018/063910 A1, US 2015/054421 A1, US 2019/229620 A1, and US 2017/085178 A1 are further exemplary of related art.

### Object and summary

The object of one or more embodiments is to contribute to overcoming the drawbacks outlined previously.

According to one or more embodiments, the above object is achieved thanks to a device having the characteristics recalled in the ensuing claims.

One or more embodiments regard a corresponding system. A system for driving a LED lighting installation may exemplify such a system.

One or more embodiments regard a corresponding method.

The solutions proposed herein implement an improved control strategy optimized for regulation of the amplitude of the current and suitable for being used in multichannel drivers.

The solutions proposed herein stem from the observation of the fact that controlling a buck converter as in the prior art, i.e., measuring the off time, adding some steps during the dimming step, and calculating in the meantime the peak-current reference for each off-time step, is burdensome from the computational standpoint for a microcontroller and induces a high risk of flickering (the bandwidth has to be rather large).

The solutions proposed herein facilitate maintenance of a peak reference that is quite constant for currents lower than a certain threshold level (for example, 500 mA) by shifting the time of switching the MOSFET back on according to a current setpoint. This procedure facilitates operation of a controller (for example, a PI - proportional-integral - controller) in tracking the setpoint, providing a signal that is high enough to be compared with the reference, hence with a high immunity to noise.

The (buck) converter can be regulated with a microcontroller that determines the supplementary time necessary in discontinuous operating mode on the basis of a setpoint value (fixed in the design stage) and of a reference output current, without having to calculate either the on time or a peak-current value.

This control strategy can be implemented with a small microcontroller with a PI unit, a comparator, and a simple timer (i.e., one without stringent requisites of precision).

The solutions proposed herein lend themselves to dimming, in particular low dimming (<1%), of multichannel drivers, for example for applications of road and street lighting.

The control is obtained with low attenuation by regulation of the amplitude of the current, in particular via an extra off time calculated on the basis of a setpoint value (a value set in the design stage) and of the reference output current (the aforesaid extra off time does not depend upon the values downstream): the result is a peak current through the inductor or coil that is substantially constant (with minor regulations of the peak implemented thanks to the PI unit).

No other calculations are necessary, it being possible to use a timer that is quite simple, giving rise to a fast control loop with a good regulation even with a microcontroller that is not particularly powerful. A small microcontroller makes it possible to control, for example, up to three channels (three comparators), thus avoiding the need to resort to a microcontroller with a high computational capacity (and an accordingly high cost) for calculating the on and off times and the peak current.

The solutions proposed herein may be applied to digital drivers, which are more flexible in the management of algorithmic procedures, but can be implemented also with the combination of analog integrated circuits.

The solutions proposed herein afford one or more of the following advantages:
simple feedback-control circuit, with the possibility of avoiding recourse to a complex operational amplifier;
operation in "deep" dimming facilitated via the use of the processing resources contained in a microcontroller, which in turn facilitates the use in multichannel applications; and
containment of the maximum operating frequency.

### Brief description of the annexed drawings

One or more embodiments will now be described, purely by way of non-limiting example, with reference to the annexed drawings, wherein:
Figure 1 is a circuit diagram exemplifying a converter device like the one described herein;
Figures 2 and 3 are timing charts exemplifying possible waveforms of signals within a device like the one described herein;
Figure 4 is a circuit diagram exemplifying a possible variant embodiment of a converter device like the one described herein;
Figure 5 groups together various timing charts exemplifying possible waveforms of signals within a device as illustrated in Figure 4; and
Figure 6 is a block diagram of a system for driving a lighting installation that can be obtained with solutions like the ones described herein.

It will be appreciated that, except where the context indicates otherwise, parts or elements that are similar are designated in the various figures by the same references.

Consequently, for reasons of brevity and simplicity of illustration, a detailed description of such parts or elements will not be repeated for each figure.

### Detailed description

In the ensuing description, various specific details are illustrated in order to enable an in-depth understanding of various examples of embodiments according to the disclosure. The embodiments may be obtained without one or more of the specific details, or with other methods, components, materials, etc. In other cases, known structures, materials, or operations are not illustrated or described in detail so that the salient aspects of the embodiments will not be obscured.

Reference to "an embodiment" or "one embodiment" in the framework of the present description is intended to indicate that a particular configuration, structure, or characteristic described in relation to the embodiment is comprised in at least one embodiment. Phrases such as "in an embodiment" or "in one embodiment" that may be present in various points of the present description do not necessarily refer exactly to one and the same embodiment. Moreover, particular conformations, structures, or characteristics may be combined in any adequate way in one or more embodiments.

The references used herein are provided merely for convenience and hence do not define the sphere of protection or the scope of the embodiments.

Again, for reasons of brevity and simplicity of illustration, in the present description one and the same reference may possibly be used to denote:
both a certain node or line, and a signal present on that node or line;
both a certain component (resistor, inductor, capacitor) and a corresponding electrical parameter (resistance, inductance, capacitance).

Again, the fact of presenting a certain element/component as "connected" or "coupled" to another element is to be understood both as indicating that between them there can be set another element/component and as indicating that the element/component can be connected or coupled directly to another element/component. When, instead, an element/component is said to be "directly connected" or "directly coupled" to another element/component, it is to be understood that no other element/component is set between them.

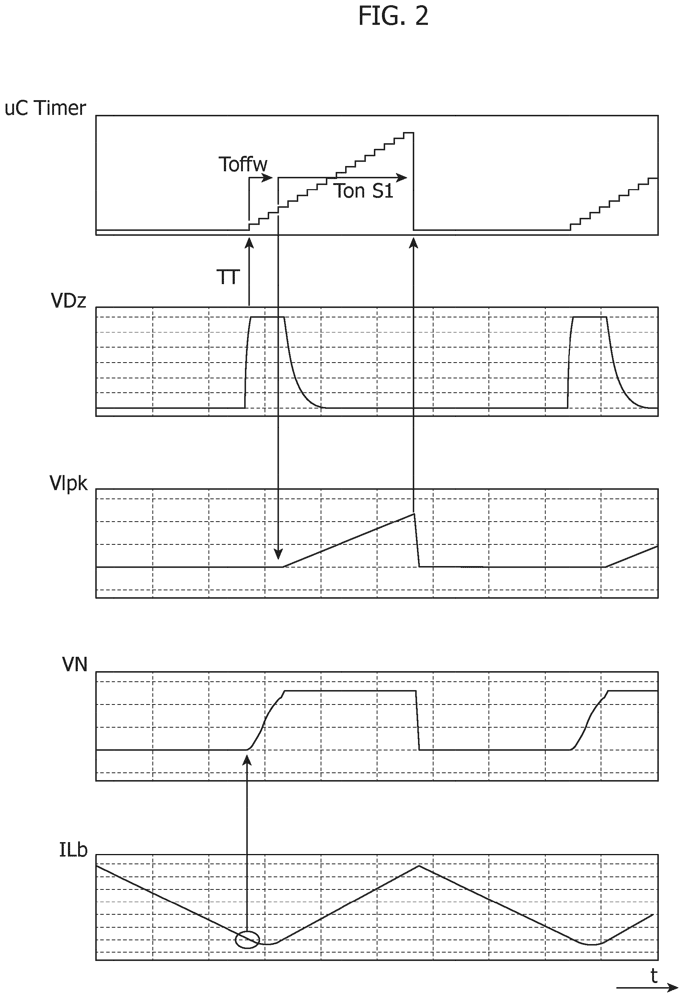

It will be noted that the timing charts of Figures 2, 3, and 5 exemplify possible waveforms of signals within a device like the one described herein, without implying any binding reference to specific quantitative values.

In basic terms, the present detailed description starts with a first preliminary description of a possible operation with high loads (basically in critical conduction mode - CCM). This does not assume particular importance for the purposes of the solutions described herein, which mainly regard operation in discontinuous conduction mode (DCM), with a signal triggered starting from when the current through the inductance or coil goes to zero: when the current goes to zero, a timer is activated, with possible parasitic oscillations resulting from the parasitic capacitances.

When the voltage oscillation is maximum, the switch of the converter closes, and the timer has available the corresponding information, which depends on the sizing of the converter.

The peak current on the inductance or coil is compared with a reference (given, for example, by a PI regulator that receives the current signal of the load and compares it with a reference).

An error is calculated and is compared with the peak current: this processing operation may even be relatively slow, given that it is independent of the calculation of discharge of the coil.

The computational burden is hence reduced, since there is no module that calculates the reference as a function of the off time of discharge of the coil.

The advantages are evident at low dimming levels, when the on time is very short, so that also the off time tends to become very short. This phenomenon is not positive because it means high working frequency and noise from electromagnetic interference (EMI).

It is hence possible to lengthen the off time, with the peak current that becomes high (which facilitates control of the system).

The decision to lengthen the off time may be made on the basis of a threshold or setpoint. This setpoint defines when it is necessary to start to lengthen the off time passing to the discontinuous conduction mode.

This may entail a high computational burden, for example if the on time is kept fixed and the off time is then calculated.

The solutions here described envisage keeping the peak-current reference fixed, calculating (in a simple way) an extra or additional off time Tw.

In particular, calculation of the extra off time Tw may be carried out so that the latter does not depend upon the downstream values of the parasitic oscillations, without blocking the on time, thus avoiding the need to make complex calculations and have a number of timers for the various calculations.

The computational burden is hence reduced in so far as the calculation is limited to the values that depend upon the reference current, with the control that proceeds autonomously, without burdensome calculations: if the peak needs to be adjusted because there are irregularities, which are difficult to control with calculations, the PI controller can intervene to mitigate the consequences.

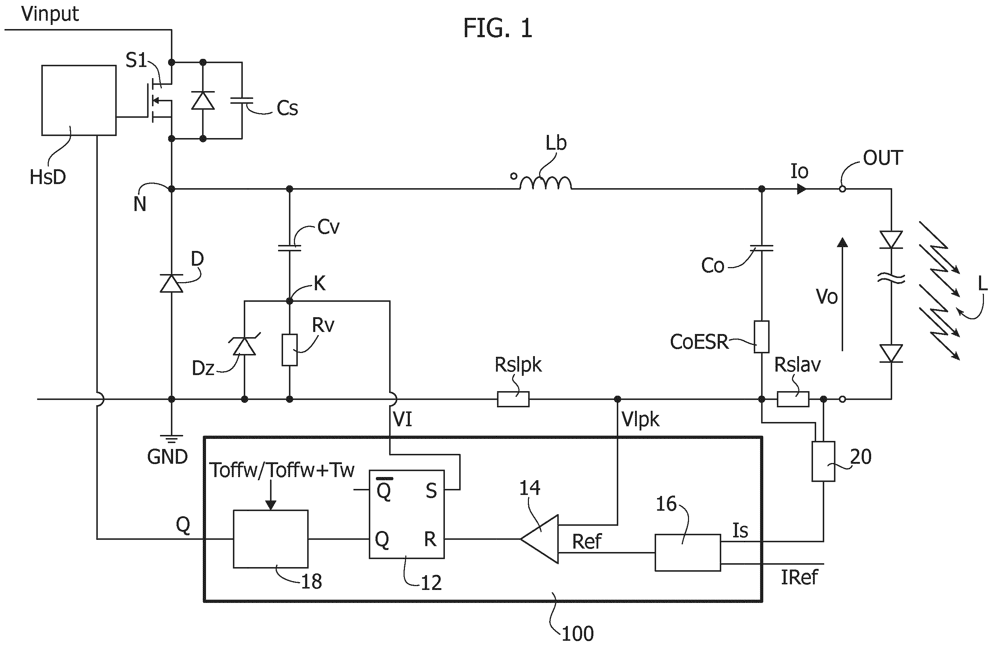

Illustrated in Figure 1 is an example of power stage, designated as a whole by 10, which may be based upon a converter of a step-down type capable of obtaining smart dimming functions with a fast and adequate control also for low currents and with limited noise due to electromagnetic interference (EMI).

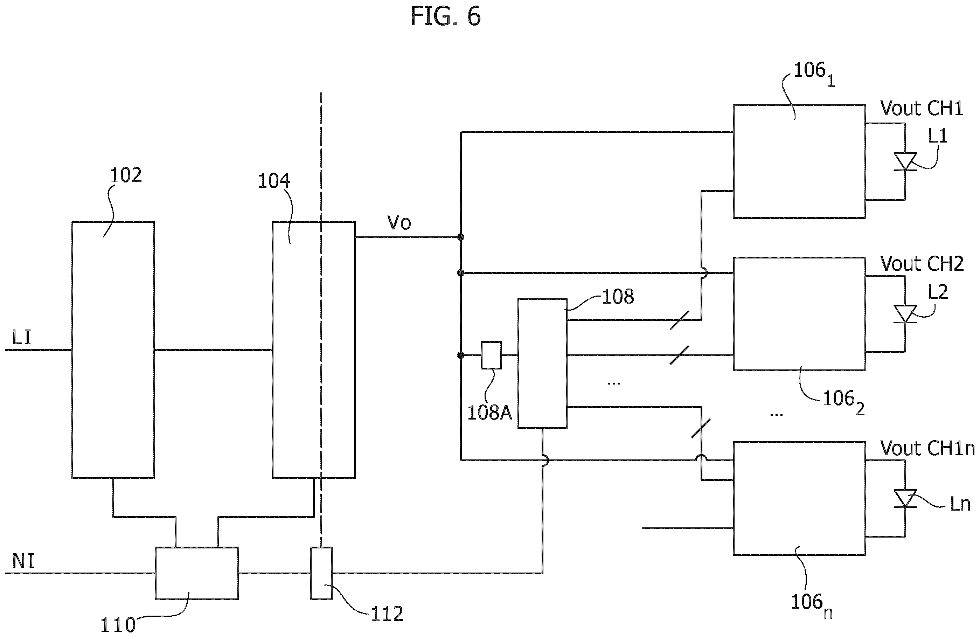

The possibility of implementing a simple control strategy enables control of a number of channels with a single microcontroller, for example in the framework of a multichannel system that is inexpensive and presents good performance, for example, as described hereinafter with reference to Figure 6.

A step-down power stage as illustrated in Figure 1 comprises an electronic switch S1 (for example, a MOSFET) arranged with its current path (between source and drain, in the case of a field-effect transistor, such as a MOSFET) between an input node or line at a voltage Vinput and a node N.

A driver HsD (functioning as high-side driver) acts - in a way in itself known - on the control terminal (the gate, in the case of a field-effect transistor, such as a MOSFET) of the switch S1. The body diode and the capacitance Cs of this switch (MOSFET) are also represented.

A diode D (functioning as freewheeling buck diode) is connected (with its cathode) to the node N, hence to the switch S1, and (with its anode) to ground GND.

Set between the node N and ground GND is a circuit for detecting the end of the current in the inductor or coil Lb, the circuit comprising a capacitor Cv connected on one side to the node/line N and on the other side to a node K, coming under which is the parallel connection of a Zener diode Dz and a resistor Rv. On the side opposite to the capacitor Cv, i.e., on the side opposite to the node K, the parallel connection of the diode Dz and the resistor Rv is connected to ground GND.

A buck inductance or coil Lb is set between the node N and an output node OUT, to which, in operation, a load L, constituted, for example, by a LED chain, is to be coupled.

It will be appreciated that the load L is not usually comprised in the embodiments given that it is to be connected to the converter device (only) during mounting/installation so that it can be supplied with a current Io at a voltage Vo.

Likewise represented in Figure 1 is an output capacitance Co illustrated with its equivalent series resistance (ESR) CoESR: this value, referred to also as internal resistance, represents the loss of useful energy that occurs with respect to an ideal (perfect) capacitor.

As illustrated here, the series connection of the output capacitance Co and the equivalent series resistance CoESR can be viewed as being set between the output node OUT and a terminal of a first shunt resistor RsIav, the other terminal of which (opposite to the capacitance Co and to the resistance CoESR) is to have the load L coupled to it.

A second shunt resistor RsIpk is set between the first shunt resistor RsIav and ground GND.

As illustrated here, the signal on the node K (designated by VI) is applied to the set input S of a flip-flop 12, the reset input R of which is driven by the output of a comparator 14, which compares the signal VIpk present between the resistor RsIav and the resistor RsIpk with a reference threshold Ref supplied by a PI controller (of a type in itself known) 16.

Albeit represented as distinct elements for simplicity of exposition, the components 12, 14 and 16 may be implemented, together with a timer 18 described hereinafter, as part of a single control unit (for example, a microcontroller) 100 configured to:
via the flip-flop 12, receive the signal VI from the node K and send the signal Q at output from the flip-flop 12 itself to the timer 18, the output of which (which to a first approximation can be viewed as a delayed replica of the signal Q at output from the flip-flop 12) drives the driver HsD;
via the comparator 14, receive the signal VIpk between the resistors RsIav and RsIpk and apply the result of the comparison with the threshold Ref to the reset input R of the flip-flop 12; and
via the PI controller 16, generate the threshold Ref as a function of a current reference IRef (obtained in a way in itself known) and of a current value Is derived from the load L, for example, across the resistor RsIav via a differential amplifier 20.

To sum up, the converter illustrated in Figure 1 comprises the switch S1, the internal capacitance Cs, and the driver HsD, with the freewheeling diode D, the inductance Lb, and the output capacitor (rectifier) Co with its resistance CoESR.

Also present are:
the downstream detection circuit Cv, Rv, Dz for detecting the current in the inductance Lb;
the (first) shunt resistor RsIav for reading the mean current in the LED load L;
the (second) shunt resistor RsIpk for reading the peak current;
the differential amplifier 20 for reading the current of the LED; and
a microcontroller (pC) 100 with internal control represented, by way of example, by the proportional-integral (PI) block 16, the comparator 14, the flip-flop 12 of an RS type and the timer 18.

The converter exemplified in Figure 1 can function both in critical conduction mode (CCM) and in discontinuous conduction mode (DCM) by controlling the current of the LED load L on the basis of the signal read on the shunt resistor RsIpk.

CCM operation can be used above all for high currents and with various signals in the converter 10 that are to follow, as a function of an action of smart control that can be performed with a microcontroller, the timing charts presented in Figure 2.

Figure 2 presents, with reference to one and the same temporal co-ordinate t on the abscissa, possible waveforms of the following signals (from the top down):
the output uC Timer of the timer 18;
the voltage VDz across the diode Dz (node K);
the voltage VIpk between the shunt resistors RsIav and RsIpk (input of the comparator 14);
the voltage VN across the diode D (node N); and
the current ILb in the inductor (coil) Lb.

Highlighted in the two charts at the top in Figure 2 are the moment TT when the timer 18 is triggered (starting from the flip-flop 12) and transition into conduction mode of the switch S1 (denoted by Ton S1), delayed with respect to the moment TT by an interval Toffw.

The above operating mode may be understood by analysing one switching period, for example starting from the point when the timer 18 is activated.

This occurs in response to the fact that the current ILb in the inductance or coil Lb goes to zero, the diode D is released and opens spontaneously, and the voltage VN on the node N increases. The corresponding rising edge determines, via the diode Dz and the node K, a signal VI, which, applied to the set input S of the flip-flop 12 is able to activate the timer 18 inside the microcontroller 100.

The timer 18, after an interval Toffw, asserts the output Q and turns on the MOSFET S1, and the current in the inductance Lb starts again, giving rise to a peak signal VIpk.

When VIpk reaches the threshold Ref, the comparator 14 resets the output by turning off the switch S1 together with the timer 18. It will be noted that the precision of the timer 18 is not so important.

The reference level Ref for the comparator 14 can be derived by the PI block 16 in the microcontroller 100 or (possibly) by an external analog component. The signals used here for the PI control 16 are the output current Is coming from the shunt resistor RsIav and amplified with the differential amplifier 20 together with the reference IRef, which can come from outside or from the microcontroller 100 possibly connected with an interface of some sort.

During operation in critical conduction mode (CCM), the working frequency of the converter increases as the set current Iref decreases.

For instance, for a converter with a value of inductance Lb of 275 µH, an input voltage Vinput of 135 V and an output voltage Vo of 60 V, when the current drops below 500 mA, the frequency becomes higher than 100 kHz.

Of course, the quantitative values given above are provided purely by way of non-limiting example: they make it possible, however, to understand how there may be generation of noise falling within the spectrum of electromagnetic interference (EMI).

To overcome this problem it is possible resort to operation in discontinuous mode (DCM).

The discontinuous mode is set up when the interval Toffw in the chart at the top in Figure 2 increases. The current ILb in the inductance or coil Lb will be zero for a certain time and then will become discontinuous, with the need to manage the wait times adequately.

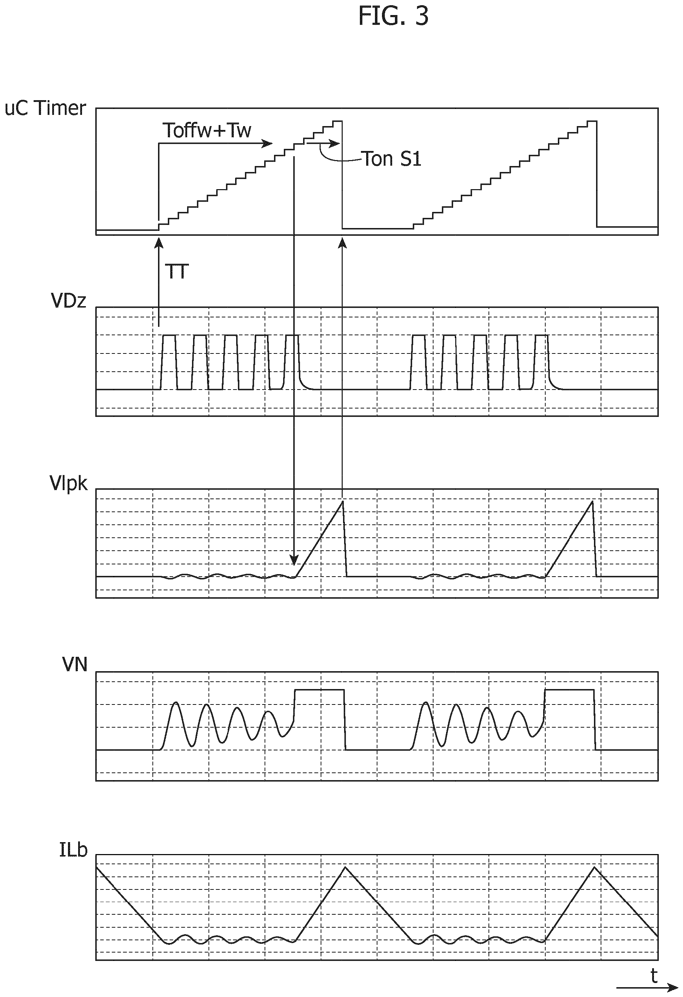

A way to do this is illustrated in Figure 3, where in the chart at the top there is illustrated the addition to the signal Toffw already seen previously of a so-called wait time Tw, thus obtaining a total value of delay Toffw + Tw higher than the value Toffw.

Figure 3 presents possible waveforms, once again with reference to one and the same temporal co-ordinate t on the abscissa, of the following signals (from top down):
the output uC Timer of the timer 18;
the voltage VDz across the diode Dz (node K);
the voltage VIpk between the shunt resistors RsIav and RsIpk (input of the comparator 14);
the voltage VN across the diode D (node N); and
the current ILb in the inductor (coil) Lb.

Highlighted in the two charts at the top in Figure 3 are the moment TT when the timer 18 is triggered (starting from the flip-flop 12) and transition into conduction mode of the switch S1 (denoted by Ton S1), delayed with respect to the moment TT by an interval Toffw to which there is now added the wait time Tw.

This has the purpose of keeping constant the peak value of the current in the inductance or coil Lb as the reference value Iref decreases, thus contributing to obtaining a fast control loop and a good regulation even with less powerful microcontrollers.

If we consider the output voltage Vo as being quite constant - as it is reasonable to do, given that it is fixed by the LED load L and by the input Vinput assigned, and even though a certain non-ideality may be encountered for the inductance Lb, the MOSFET (switch S1), the diode D, and all the components of the converter - we note that for low reference values Iref, the operating frequency of operation becomes too high (EMI noise) so that it is possible to decide to pass from critical mode (CCM) to discontinuous mode (DCM).

If we consider assuming a value of current Isetthr (for example, defined at the level of design parameter) as threshold of transition between the two operating modes, we may consider choosing for the wait time Tw, for currents lower than the aforesaid threshold, a value such that the working period will increase as Iref varies, thus keeping the peak current (substantially) constant.

It is useful to have a fast reaction to control the output Io supplied to the LED load during the dimming mode, above all for fast transients on Iref, with a containment of the final working frequency.

The total off time can hence change continuously without considering the oscillation and, as may be appreciated from Figure 3, the peak current is constant (VIpk is the same as in Figure 2).

Figure 3 shows in particular - once again by way of example - the conditions with Iref of 240 mA, Tw of 10 µs, and a total value Toffw + Tw of approximately 12 µs.

From Figure 3 it may be noted that the switching frequency is lower than the found for Iref of 500 mA, whereas the pak current is practically constant. It may be noted that the PI regulator 16 regulates the peak only slightly to take into account certain non-ideal conditions, and hence can have a reduced bandwidth even though the overall variation of Iref is rapid.

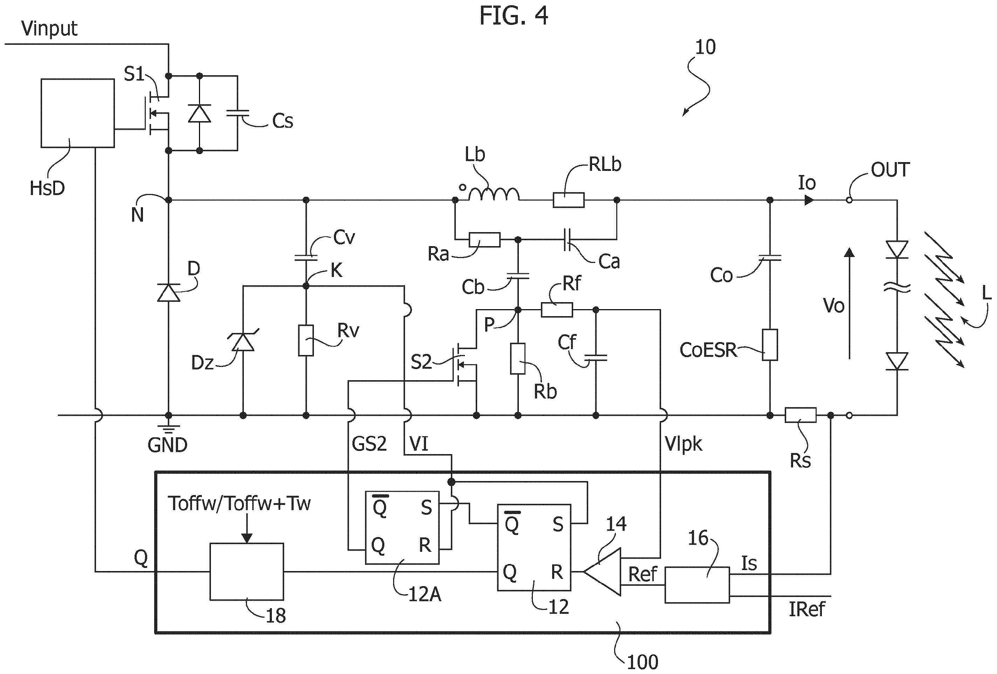

Proposed in Figure 4 is a different scheme for control of the peak current that basically reproduces a solution proposed in an Italian patent application entitled "Converter device and corresponding method" (applicant reference 2023P0006 IT, inventor Daniele Luccato) filed on the same date as the present patent application.

Once again illustrated in Figure 4 is an example of converter device, designated as a whole by 10, comprising an electronic switch S1 (for example, a MOSFET) arranged with its current path (between source and drain, in the case of a field-effect transistor, such as a MOSFET) between an input node or line at a voltage Vinput and a node N.

A driver HsD (functioning as high-side driver) acts - in a way in itself known - on the control terminal (the gate, in the case of a field-effect transistor, such as a MOSFET) of the switch S1. Of this switch (MOSFET) there are also illustrated the body diode and the capacitance Cs.

A diode D (functioning as freewheeling buck diode) is connected (with its cathode) to the node N, hence to the switch S1, and (with its anode) to ground GND.

Set between the node N and ground GND is a circuit for detecting end of the current (in the inductor or coil Lb of the converter), which comprises a capacitor Cv connected on one side to the node/line N and on the other side to a node K, coming under which is the parallel connection of a Zener diode Dz and a resistor Rv; on the side opposite to the capacitor Cv, i.e., on the side opposite to the node K, the parallel connection of the diode Dz and the resistor Rv is connected to ground GND.

In Figure 4 the reference S2 denotes a low-signal switch (for example, once again a MOSFET), the control terminal of which (the gate, in the case of a field-effect transistor, such as a MOSFET) is driven by the output Q of a (further) set-reset flip-flop 12A that receives:
on its set input S, the signal neg(Q) at output from the flip-flop 12; and
on its reset input R, the signal VI present on the node K, which, as in the case of Figure 1, is sent to the set input S of the flip-flop 12.

The current path (between source and drain, in the case of a field-effect transistor, such as a MOSFET) through the switch S2 is connected between ground GND and a node P comprised in a network configured to transfer to ground GND a signal indicative of the current ILb that flows through the buck inductance or coil Lb, associated to which is a resistance RLb.

The inductance Lb and the resistance RLb are here represented connected together in series between the node N and the output node of the converter circuit, denoted by OUT.

At the node OUT there is to be connected a load, here represented in the form of a string of LEDs L, which are to function as lighting sources.

It will be appreciated that, also in this case, the load is not usually comprised in the embodiments given that it is to be connected to the converter device (only) during mounting/installation so that it can be supplied with a current Io at a voltage Vo.

As illustrated in Figure 4, the network configured to transfer to ground the signal indicative of the current that flows through the buck inductance or coil Lb comprises:
a resistor Ra and a capacitor Ca, arranged in series with one another and connected in parallel to the buck inductance or coil Lb (and to the corresponding resistance RLb);
a capacitor Cb connected between the node P and the intermediate node (to which for simplicity no reference is associated) between the resistor Ra and the capacitor Ca; and
a resistor Rb connected between the node P and ground GND.

As illustrated herein, also connected between the node P and ground GND is an RC lowpass filter comprising a resistor Rf connected to the node P and a capacitor Cf set between the resistor Rf and ground GND, with the intermediate node (to which for simplicity no reference is associated) between the resistor Rf and the capacitor Cf connected to an input of the comparator 14 for supplying to the comparator a signal VIpk that is to be compared with a reference threshold Ref supplied by the PI controller (also here of a type in itself known) 16, with the output signal of the comparator 14 applied to the reset input R of the flip-flop 12, which in this case is arranged:
with its output Q sent to the timer 18 that sends the signal Q (as delayed replica) to the driver HsD; and
with its output neg(Q) sent, as has been seen, to the set input S of the further flip-flop 12A, which drives, with its output Q, the control terminal (gate) of the switch S2.

Also in this case, even though they are represented as distinct elements for simplicity of exposition, the components 12, 14, 16, and 18 may be implemented as part of a single control unit (for example, a microcontroller) 100 configured to:
via the flip-flop 12, receive the signal VI from the node K, to send its output signal neg(Q) to the further flip-flop 12A, which in turn drives, with its output Q, the control terminal of the switch S2, and send once again its output signal Q to the timer 18, which drives the driver HsD, thus rendering conductive the switch S1 with a delay Toffw or else with a delay Toffw + Tw with respect to the moment TT of activation of the timer 18, with a choice made (for example, by the microcontroller 100) according to the criteria discussed herein;
via the comparator 14, receive the signal VIpk from the output of the filter Rf, Cf connected to the node P and apply the result of the comparison with the threshold Ref to the reset input R of the flip-flop 12; and
via the PI controller 16, generate the threshold Ref as a function of a current reference IRef (obtained in a way in itself known) and of a current value Is derived from the load L, for example, across a shunt resistor Rs connected between ground GND and the terminal of the load L opposite to the node OUT.

Also visible in Figure 4 is an output capacitance Co represented with its equivalent series resistance (ESR) CoESR.

As illustrated herein, the series connection of the output capacitance Co and of the equivalent series resistance CoESR may be viewed as being set between the output node OUT and the terminal of the shunt resistor Rs that is grounded, i.e., the terminal of the shunt resistor Rs opposite to the load L.

The converter circuit of Figure 4 has the switch S1 (MOSFET) floating and is driven by the high-side driver HsD in such a way that the ground is in common with the control.

The device 10 of Figure 4 hence comprises, in substantially the same way as for the device 10 of Figure 1, an input node configured to receive an input signal Vinput and an output node OUT configured to have coupled thereto an electrical load L, as well as an inductance Lb, RLb between the output node OUT and a driver node N.

Once again, in substantially the same way as for the device 10 of Figure 1, the device 10 of Figure 4 likewise comprises:
an electronic switch (the MOSFET S1) between the input node Vinput and the driver node N so that the driver node N is electrically coupled to the input node Vinput in response to the electronic switch S1 being conductive (interval Ton);
a freewheeling diode D configured to facilitate the flow of current between ground GND and the driver node N; and
end-of-current detection circuitry Cv, Rv, Dz set between the driver node N, which is coupled the inductance Lb, RLb, and ground GND, wherein the end-of-current detection circuitry Cv, Rv, Dz is configured to produce an end-of-current signal VI at an end-of-current node K, the end-of-current signal VI being indicative of the end of the current ILb through the inductance Lb, RLb between the driver node N and the output node OUT in response to the electronic switch S1 being non-conductive (off time).

Both of the solutions of Figures 1 and 4 envisage the presence of driver circuitry for driving the electronic switch S1 (basically the components identified by the references 12, 14, 16, 18, 100, HsD), which receives (on the flip-flop 12) the end-of-current signal VI and switches (via the timer 18 and the driver HsD) the electronic switch S1 from non-conductive to conductive, once again facilitating the flow of current ILb through the inductance Lb, with a delay with respect to the end of the current ILb through the inductance Lb, with this delay that assumes:
a first value Toffw, or else
a second value Toffw + Tw, higher than the first,
according to whether the current-reference signal Iref is, respectively, higher (as in the case of operation in critical conduction mode - CCM) or else lower (as in the case of operation in discontinuous conduction mode - DCM) than the threshold level Isetthr mentioned previously.

In both of the solutions of Figures 1 and 4, the driver circuitry of the electronic switch S1 is configured to maintain substantially constant the peak value of the current ILb through the inductance Lb in response to the aforesaid delay with respect to the end of the current ILb through the inductance Lb passing from the first value Toffw to the second value Toffw + Tw. In other words, the value Tw is chosen (for example, as design parameter or determined empirically) in such a way as to keep the peak value of the current ILb substantially constant.

In both of the solutions of Figures 1 and 4, the driver circuitry for driving the electronic switch S1 comprises a timer 18 configured to be started (instant TT) in response to the end of the current ILb through the inductance Lb, with the driver HsD of the electronic switch S1 configured to be activated (by the signal Q coming from the timer 18) with the first value Toffw or with the second value Toffw + Tw of delay with respect to the end of the current ILb through the inductance Lb.

In both of the solutions of Figures 1 and 4, the driver circuitry for driving the electronic switch S1 is configured to:
make (in the comparator 14) a comparison of a peak signal (the signal VIpk) indicative of a peak value of the current ILb through the inductance Lb with a reference threshold Ref that is a function (given by the PI controller 16) of the current-reference signal Iref; and
switch (via the flip-flop 12, the timer 18, and the driver HsD) the electronic switch S1 from non-conductive to conductive with the aforesaid delay Toffw or Toffw + Tw with respect to the end of the current ILb through the inductance Lb in response to the outcome of the comparison made in the comparator 14.

In both of the solutions of Figures 1 and 4, the driver circuitry for driving the electronic switch S1 is configured to produce (via the PI control 16) the reference threshold Ref of the comparator 14 as a function of the current-reference signal Iref and of an actual-current signal Is indicative of the current in the load L, i.e., at the output node OUT, detected via a shunt resistor such as RsIav (through the amplifier 20) or Rs.

As compared to the device 10 of Figure 1, the device 10 of Figure 4 also comprises current-detection circuitry for detecting the current through the inductance or coil Lb (the components Ra, Ca, Cb, Rb), which comprises the series connection of a first resistor Ra coupled to the driver node N and a first capacitor Ca coupled to the output node OUT, and a second capacitor Cb having a first end coupled between the first resistor Ra and the first capacitor Ca and a second end coupled to a current-detection node P, with a second resistor Rb between the current-detection node P and ground GND.

The device 10 of Figure 4 once again envisages that the current-peak signal VIpk will comprise a lowpass-filtered replica (RC lowpass filter Rf, Cf) of a current-peak signal detected at the current-detection node P.

Once again unlike the device 10 of Figure 1, the device 10 of Figure 4 also comprises zeroing circuitry (the switch S2) between the current-detection node P and ground GND, the zeroing circuitry S2 being configured to force to ground the current-detection node P in response to the electronic switch S1 being non-conductive.

It will on the other hand be appreciated that in the case of the patent application filed on the same date already cited previously, the current-detection node P is forced to ground by the switch S2 in response to the electronic switch S1 being non-conductive as a result of direct driving of the switch S2 by the flip-flop 12, with the electronic switch S2 having a control terminal (gate) configured to render conductive the further electronic switch S2 on the basis of a signal neg (Q) asserted (by the flip-flop 12) in response to the fact that the end-of-current signal VI indicates the end of the current ILb through the inductance Lb, RLb in response to the electronic switch S1 being non-conductive.

In the case of the solution illustrated in Figure 4, the current-detection node P is instead forced to ground by the switch S2 in response to the electronic switch S1 being non-conductive as a result of indirect driving by the flip-flop 12, i.e., with the switch S2 driven by the flip-flop 12A, which is in turn driven by the flip-flop 12.

In this connection, it is noted once again that the fact of presenting a certain element/component as being "connected" or "coupled" to another element is to be understood both as indicating the fact that between them there may be set another element/component and as indicating the fact that the element/component may be connected or coupled directly to another element/component. When, instead, it is said that an element/component is "directly connected" or "directly coupled directly" to another element/component, it is to be understood that between them there is not set yet a further element/component.

Likewise, the expression that a certain behaviour or event is determined "in response" to another behaviour or event is to be understood both as indicating the fact that the first behaviour or event determines directly the second behaviour or event and as indicating the fact that the first behaviour or event determines the second behaviour or event in an indirect way (for example, with a delay and with intervention of an element/component set between them, such as the flip-flop 12A).

It will on the other hand be appreciated that, in the case of the solution illustrated in Figure 4, the driver circuitry for driving the electronic switch S1 is configured (with the flip-flop 12A) to activate the zeroing circuitry (the switch S2), without applying to the zeroing circuitry the delay to which the timer 18 makes it possible to attribute two different values (Toffw and Toffw + Tw) with respect to the end of the current ILb through the inductance Lb.

As compared to the solution of Figure 1, the solution of Figure 4 affords the advantage that the control of the peak current is not derived by the shunt resistance RsIpk but by a network Ra, Ca, Rb, Cb and filtered by the lowpass filter Rf, Cf.

Moreover, in the solution of Figure 4 the shunt resistor Rs (corresponding to the resistor RsIav of Figure 1) is referenced to ground GND, so that it is hence possible to do without the differential amplifier 20, which may be rather costly.

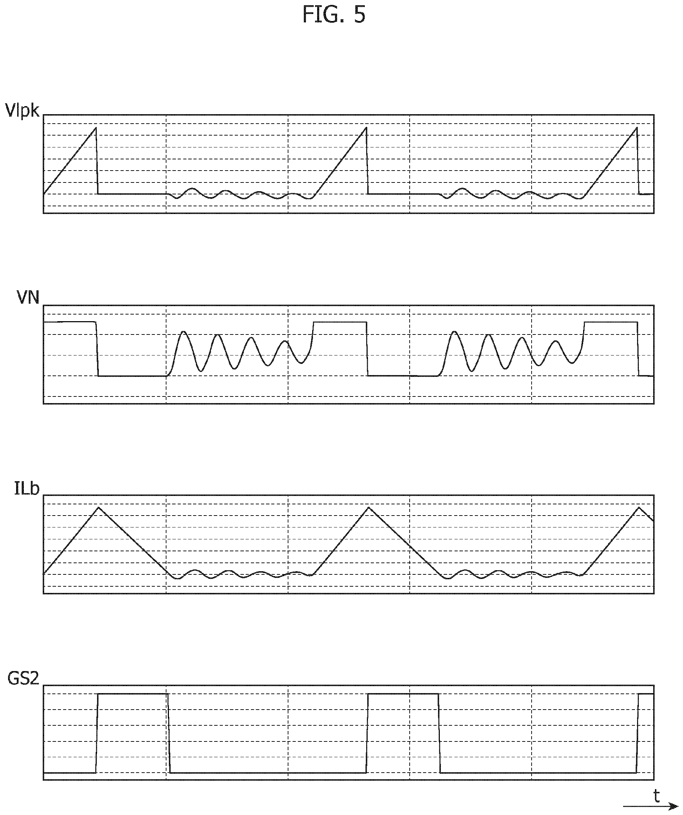

Figure 5 presents, once again with reference to one and the same temporal co-ordinate t on the abscissa, possible waveforms of the following signals (from the top down):
the signal VIpk;
the voltage VN across the diode D (node N);
the current ILb in the inductor (coil) Lb; and
the gate-to-source voltage gate-source GS2 of the electronic switch S2.

As has been said, in Figure 4 there is envisaged an internal control of the microcontroller 100 different from the one seen previously. There is in fact present an output dedicated for a (small) small-signal MOSFET S2 (GS2), which keeps the signal VIpk at ground during discharge of the inductance Lb.

As illustrated in the timing chart at the bottom in Figure 5 (waveform GS2) the MOSFET is released when the current goes to zero, leaving for the signal VIpk the possibility of oscillation. This makes it possible to have a better approximation for the actual current ILb.

It will be appreciated that, at least in principle, the mechanism of intervention on the time Toffw/Toffw + Tw described herein with reference to (just) two values according to whether the current-reference signal Iref (indicative of the dimming level) is higher or lower than the (single) threshold Isetthr can be extended to more than one threshold. This may be obtained by envisaging that the driver circuitry for driving the switch S1 is configured to switch the electronic switch S1 from non-conductive to conductive with one between a first value or a second value (chosen from a pair of values comprised in a range of possible values that more extensive than the one represented by Toffw and Toffw + Tw) in response to whether the comparison of the current-reference signal Iref with a corresponding threshold level associated to the aforesaid pair of values indicates that the current-reference signal Iref is, respectively, higher or else lower than the aforesaid threshold level, with the second value higher than the first value.

It will be noted again that, albeit advantageous, implementation of the switch S1 (and/or of the switch S2) via field-effect transistors (MOSFETs) is not imperative. At least in principle, also possible is an implementation with bipolar junction transistors (BJTs), where the control terminal is represented by the base (instead of by the gate) and the current path is represented by the current flow path between the emitter the collector (instead of by the current flow path between source and drain).

Again, the foregoing description is illustrative of devices 10 in which it is assumed that Vinput is a voltage positive with respect to ground GND (with the driver HsD functioning as high-side driver). The solutions described herein may be used also in the case where Vinput is a voltage negative with respect to ground, with corresponding adaptations to the polarity/connection of the components, such as the diodes D, Dz, D1, or D2.

Figure 6 is a block diagram of a lighting system, designated as a whole by 1000, which can be obtained with the solutions described herein.

In the example presented herein, the system 1000 comprises a power-factor-correction (PFC) stage 102, which can be obtained with a boost converter operating in continuous or discontinuous mode.

The PFC stage 102 receives a mains-supply input LI (for example, from an electrical mains supply) and in turn supplies an (isolated) DC-DC conversion stage 104, which may, for example, be a flyback stage, an LLC stage, or a stage with asymmetrical converters.

End-of-current regulation can be obtained, starting from an output signal Vo of the DC-DC conversion stage 104, via a plurality of channels 106₁, 106₂, ..., 106ₙ that drive respective loads, such as LED lighting sources, L₁, L₂, ..., Lₙ by applying thereto supply voltages Vout CH1, Vout CH2, ..., Vout CHn.

It will be appreciated that the loads in question are not usually comprised in the embodiments, given that they are to be connected (only) during mounting/installation of the lighting system (lighting installation).

The channels 106₁, 106₂, ..., 106ₙ may be obtained as illustrated previously and may be controlled via a single microcontroller (pC) 108, common to all the channels 106₁, 106₂, ..., 106ₙ, which receives, for example via a regulator 108A, the isolated signal Vo of the DC-DC converter 104.

Also represented in Figure 6 is a microprocessor 110, configured (in a way in itself known) for supervising, on the basis of a mains-supply input NI, operation of the PFC stage 102 and of the DC-DC conversion stage 104, with the microprocessor 110 that is to supply to the microcontroller 108 a feedback signal fb that is isolated as a result of the presence of an isolator 112 (for example, an opto-isolator).

In the solution exemplified in Figure 6, the PFC block 102 and the DC-DC converter 104 may be components of a currently available type, configured, in a way in itself known, to be controlled with a microprocessor, such as the microprocessor 110.

It is also possible to exchange information with wired or wireless networks and to send information, such as the output setpoints, via the isolated feedback fb.

The references received by the microcontroller 108 in the isolated part can be used thereby to set the current Iref in the n outputs to the loads L₁, L₂, ..., Lₙ, with respective values Iref1, Iref2, ..., Irefn, which may be different from one another, with the possibility of comparing them with respective values Isetthr1, Isetthr2, ..., Isetthrn to decide whether to drive the loads L₁, L₂,..., Lₙ on the basis of Toffw or Toffw+Tw.

It will be noted again that also the values of Toffw or of Toffw+Tw can be selected in different ways for the various channels CH1, CH2, ..., CHn of the system.

In the secondary side there may hence be a microcontroller that controls all the converters.

To sum up:
Figure 6 illustrates a multichannel system, i.e., a system 1000 comprising a number of devices 106₁, 106₂, ..., 106ₙ, as discussed previously, that are configured to have coupled thereto respective loads L1, L2, ..., Ln, and a control unit (the microcontroller 108) common to the aforesaid devices 106₁, 106₂, ..., 106ₙ and configured to control the devices 106₁, 106₂, ..., 106ₙ on the basis of respective current-reference signals IRef (which can express a dimming action); and
the aforesaid devices 106₁, 106₂, ..., 106ₙ are configured to have coupled thereto respective loads L1, L2, ..., Ln comprising lighting sources (for example, LED solid-state sources) that can be driven with respective dimming levels, where the aforesaid respective current-reference signals IRef identify the aforesaid respective dimming levels.

The secondary supply coming from the DC-DC converter 104 (signal Vo) can be regulated on the basis of the highest voltage from among Vout CH1, Vout CH2, ..., Vout CHn, i.e., all the output channels.

For instance, if the LED chain L1 has the voltage higher than the LED chain Ln, Vo will be higher than Vout CH1; the fact of having the value Vo that tracks the voltage outputs helps to increase efficiency.

As has been seen, the microcontroller 108 may be supplied, for example, with a voltage Vo starting from a voltage regulator 108A or else starting from a second auxiliary voltage output coming from the DC-DC converter 104.

The microcontroller 108 is able to manage the channels CH1, CH2, ..., CHn by exchanging the necessary information for each converter: this information may be any information that facilitates a structured step-down operation as exemplified in Figure 1 or in Figure 4.

Of course, without prejudice to the underlying principles, the details and the embodiments may vary with respect to what has been illustrated herein purely by way of example, without thereby departing from the sphere of protection, as this is specified in the annexed claims.

### LIST OF REFERENCES

| | |
|---|---|
| Converter device | 10 |
| Switch (MOSFET) | S1 |
| MOSFET capacitance | Cs |
| Driver | HsD |
| Input node | Vinput |
| Output node | OUT |
| Driver node | N |
| Diode | D |
| Ground | GND |
| End-of-current detection capacitor | Cv |
| End-of-current detection node | K |
| End-of-current detection Zener diode | Dz |
| End-of-current detection resistor | Rv |
| Inductor (coil) | Lb |
| Coil series resistance | RLb |
| Resistor for transferring current to ground | Ra, Rb |
| Capacitor for transferring current to ground | Ca, Cb |
| Switch (MOSFET) | S2 |
| Node for transferring current to ground | P |
| Resistor and capacitor of RC lowpass filter | Rf, Cf |
| Output voltage and current | Vo, Io |
| Output capacitance | Co |
| Equivalent series resistance (ESR) | CoESR |
| Load (LED) | L |
| Shunt resistor | RsIav |
| Shunt resistor | RsIpk |
| Shunt resistor | Rs |
| Microcontroller | 100 |
| Flip-flop | 12, 12A |
| Comparator | 14 |
| PI circuit | 16 |
| Trigger time of timer 18 | TT |
| Delay/wait time | Toffw/Tw |
| On time of switch S1 | Ton S1 |
| Signal of timer 18 | uC Timer |
| Voltage on diode Dz | VDz |
| Input voltage of comparator | VIpk |
| Voltage on diode D (node N) | VN |
| Current of inductor (coil) | ILb |
| Switch | S2 |
| Signal for driving switch S2 | GS2 |
| Lighting system | 1000 |
| Power-factor correction, PFC | 102 |
| DC-DC conversion | 104 |
| Channels for driving loads | 106ᵢ, I = 1, ..., 4 |
| Loads (LED sources) | Li, I = 1, ..., 4 |
| Microcontroller | 108 |
| Regulator | 108A |
| Microprocessor | 110 |
| Opto-isolator | 112 |

## Claims

1. A device (10) comprising:
an input node configured to receive an input signal (Vinput), and an output node (OUT) configured to have coupled thereto an electrical load (L);
an inductance (Lb) between the output node (OUT) and a driver node (N);
an electronic switch (S1) between the input node (Vinput) and the driver node (N), wherein the driver node (N) is electrically coupled to the input node (Vinput) in response to the electronic switch (S1) being conductive;
end-of-current detection circuitry (Cv, Rv, Dz) between the driver node (N) and the inductance (Lb), wherein the end-of-current detection circuitry (Cv, Rv, Dz) is configured to produce an end-of-current signal (VI) indicative of the end of the current (ILb) through the inductance (Lb) in response to the electronic switch (S1) being non-conductive; and
driver circuitry (12, 14, 16, 18, 100, HsD) of the electronic switch (S1), said circuitry being configured to receive (12) the end-of-current signal (VI) and to switch (18, HsD) the electronic switch (S1) from non-conductive to conductive, thus facilitating the flow of current (ILb) through the inductance (Lb), with a delay (Toffw; Toffw + Tw) with respect to the end of the current (ILb) through the inductance (Lb), wherein the driver circuitry (12, 14, 16, 18, 100, HsD) is further configured to receive (16) a current-reference signal (Iref) and switch the electronic switch (S1) from non-conductive to conductive with one of a first value (Toffw) and a second value (Toffw + Tw) of said delay with respect to the end of the current (ILb) through the inductance (Lb) in response to the current-reference signal (Iref) being, respectively, higher or else lower than a threshold level, wherein said second value (Toffw + Tw) is higher than said first value (Toffw).

2. The device (10) of claim 1, wherein the driver circuitry (12, 14, 16, 18, 100, HsD) for driving the electronic switch (S1) comprises a timer (18), configured to be started (TT) in response to the end of the current (ILb) through the inductance (Lb), and a driver stage (HsD) for driving the electronic switch (S1), configured to be activated (Q) by said timer (18) with said first value (Toffw) or said second value (Toffw + Tw) of delay with respect to the end of the current (ILb) through the inductance (Lb).

3. The device (10) of claim 1 or claim 2, wherein the driver circuitry (12, 14, 16, 18, 100, HsD) for driving the electronic switch (S1) is configured to:
make a comparison (14) of a peak signal (VIpk) indicative of a peak value of the current (ILb) through the inductance (Lb) with respect to a reference threshold (Ref) that is a function (16) of the current-reference signal (Iref); and
switch (12, 18, HsD) the electronic switch (S1) from non-conductive to conductive with said delay (Toffw; Toffw + Tw) with respect to the end of the current (ILb) through the inductance (Lb) in response to the outcome of said comparison (14).

4. The device (10) of claim 3, wherein the driver circuitry (12, 14, 16, 18, 100, HsD) for driving the electronic switch (S1) is configured (16) to produce said reference threshold (Ref) as a function of the current-reference signal (Iref) and of an actual-current signal (Is) indicative (RsIav, 20; Rs) of the current at the output node (OUT).

5. The device (10) of any one of the preceding claims, comprising:
current-detection circuitry (Ra, Ca, Cb, Rb), comprising the series connection of a first resistor (Ra) coupled to the driver node (N) and a first capacitor (Ca) coupled to the output node (OUT), a second capacitor (Cb) having a first end coupled between the first resistor (Ra) and the first capacitor (Ca) and a second end coupled to a current-detection node (P), with a second resistor (Rb) between the current-detection node (P) and ground (GND); and
zeroing circuitry (S2) between the current-detection node (P) and ground (GND), the zeroing circuitry (S2) being configured to force the current-detection node (P) to ground in response to the electronic switch (S1) being non-conductive.

6. The device (10) of claim 5, wherein the zeroing circuitry comprises a further electronic switch (S2) having a current flow path therethrough and arranged between the current-detection node (P) and ground (GND).

7. The device (10) of claim 5 or claim 6, wherein the driver circuitry (12, 14, 16, 18, 100, HsD) for driving the electronic switch (S1) is configured (12A) to activate the zeroing circuitry (S2) omitting to apply (18) to the zeroing circuitry (S2) said delay (18) with a first value (Toffw) or a second value (Toffw + Tw) with respect to the end of the current (ILb) through the inductance (Lb).

8. The device (10) of any one of the preceding claims, wherein the driver circuitry (12, 14, 16, 18, 100, HsD) is configured to maintain the peak value of the current (ILb) through the inductance (Lb) substantially constant in response to said delay with respect to the end of the current (ILb) through the inductance (Lb) passing from said first value (Toffw) to said second value (Toffw + Tw).

9. A system (1000) comprising:
a plurality of devices (106₁, 106₂, ..., 106ₙ) according to any one of claims 1 to 8, which are configured to have respective loads (L1, L2, ..., Ln) coupled thereto, and
a control unit (108), common to said plurality of devices (106₁, 106₂, ..., 106ₙ) and configured to control said plurality of devices (106₁, 106₂, ..., 106ₙ) on the basis of respective current-reference signals (IRef).

10. The system (1000) of claim 9, wherein the devices of said plurality of devices (106₁, 106₂, ..., 106ₙ) are configured to have coupled thereto respective loads (L1, L2, ..., Ln) comprising lighting sources that can be driven at respective dimming levels, where said respective current-reference signals (IRef) identify said respective dimming levels.

11. A method, comprising:
providing a device (10) according to any one of claims 1 to 8, wherein the device (10) comprises said input node, said output node (OUT), said inductance (Lb) between the output node (OUT) and a driver node (N) as well as said electronic switch (S1) between the input node (Vinput) and the driver node (N), said end-of-current detection circuitry (Cv, Rv, Dz) between the driver node (N) and the inductance (Lb) and said driver circuitry (12, 14, 16, 18, 100, HsD) of the electronic switch (S1),
receiving an input signal (Vinput) on said input node;
coupling an electrical load (L) to said output node (OUT) with said inductance (Lb) set between the output node (OUT) and the driver node (N);
electrically coupling the driver node (N) to the input node (Vinput) in response to the electronic switch (S1) being conductive;
producing (Cv, Rv, Dz) an end-of-current signal (VI) indicative of the end of the current (ILb) through the inductance (Lb) in response to the electronic switch (S1) being non-conductive; and
receiving (12) the end-of-current signal (VI) and switching (18, HsD) the electronic switch (S1) from non-conductive to conductive, thus facilitating the flow of current (ILb) through the inductance (Lb), with a delay (Toffw; Toffw + Tw) with respect to the end of the current (ILb) through the inductance (Lb),
wherein the method comprises receiving (16) a current-reference signal (Iref) and switching the electronic switch (S1) from non-conductive to conductive with a first value (Toffw) or a second value (Toffw + Tw) of said delay with respect to the end of the current (ILb) through the inductance (Lb) in response to the current-reference signal (Iref) being, respectively, higher or else lower than a threshold level, where said second value (Toffw + Tw) is higher than said first value (Toffw).
